# FASCICULE DE BREVET EUROPEEN

(11) **EP 3 146 378 B1**
(45) Date de publication et mention de la délivrance du brevet: **26.06.2019**
(21) Numéro de dépôt: 15732031.8
(22) Date de dépôt: 22.05.2015
(51) Int. Cl.: G02B 27/01

(54) **DISPOSITIF DE SUPPORT D'UNE LAME SEMI-RÉFLÉCHISSANTE AMOVIBLE POUR UN AFFICHEUR TÊTE HAUTE**
VORRICHTUNG ZUR STÜTZE EINER LÖSBAREN HALBREFLEKTIERENDEN PLATTE FÜR EINE HEAD-UP-ANZEIGE
DEVICE FOR SUPPORTING A REMOVABLE SEMI-REFLECTIVE PLATE FOR A HEAD-UP DISPLAY

(30) Priorité: 22.05.2014 FR 1401167
(43) Date de publication de la demande: 29.03.2017
(73) Titulaire: DAV, 94046 Créteil Cedex (FR)
(72) Inventeur: DALMAYRAC, Stéphane, F-94046 Creteil Cedex (FR)
(74) Mandataire: Delplanque, Arnaud
(86) Numéro de dépôt international: PCT/FR2015/051350
(87) Numéro de publication internationale: WO 2015/177478

(56) Documents cités:
- WO-A1-2013/059662
- WO-A1-2014/065097
- JP-A- H10 227 991
- US-A- 4 775 218

## Description

### 1. Domaine technique de l'invention

L'invention concerne un dispositif de support d'une lame semi-réfléchissante. En particulier, l'invention concerne un dispositif de support d'une lame semi-réfléchissante d'un afficheur tête haute installé dans un véhicule automobile.

### 2. Arrière-plan technologique

L'invention trouvera ses applications, par exemple, dans les véhicules automobiles pour informer les utilisateurs du véhicule, en particulier son conducteur.

Il est connu d'équiper un véhicule automobile avec un système d'affichage, dit tête haute. Un tel système est placé dans le champ de vision du conducteur automobile et affiche une information relative à l'état du véhicule, du trafic ou autre.

L'objectif d'un tel affichage tête haute et de permettre au conducteur de voir cette information sans déplacer son regard de la route afin de réduire les risques et améliorer ainsi la sécurité. Ainsi, les informations sont affichées sur un dispositif semi réfléchissant, par exemple une lame semi-réfléchissante, couramment appelée *combiner* en anglais, sur laquelle se forme une image virtuelle affichant l'information, la lame étant placée entre le conducteur et la scène de route, dans son champ de vision. Généralement, la lame semi-réfléchissante est placée au dessus du tableau de bord du véhicule, entre le volant et le pare-brise.

Pour permettre une protection de la lame semi-réfléchissante contre différents types d'agression, par exemple le rayonnement solaire, la poussière, les sollicitations accidentelles du conducteur (chocs, rayures, traces de doigts, etc.) ou le vol, la lame semi-réfléchissante est généralement escamotable, c'est-à-dire qu'elle peut être rentrée dans le tableau de bord en cas de non-utilisation, de façon à ne plus être visible.

Néanmoins, l'escamotage de la lame semi-réfléchissante entraîne aussi certains inconvénients. Notamment :
- la cinématique de l'escamotage nécessite des pièces spécifiques encombrantes et coûteuses qui s'ajoutent à la lame semi-réfléchissante, augmentant ainsi le coût et la place nécessaire de l'affichage tête haute.
- la mise en position de la lame semi-réfléchissante selon la cinématique peut détériorer la précision de la position requise pour un réglage adapté au conducteur,
- les pièces mécaniques en mouvement sont plus susceptibles d'introduire une défaillance dans l'affichage tête haute,
- la réparation ou le changement de la lame semi-réfléchissante est coûteux et nécessite généralement l'intervention d'un spécialiste.

Les documents JP H10 227991 A, WO 2014/065097 A1 et WO2013/059662 A1 décrivent des dispositifs d'affichage comportant des lames semi-réfléchissantes se déplaçant en rotation.

### 3. Objectifs de l'invention

L'invention vise à pallier au moins certains des inconvénients des dispositifs de support de lame semi-réfléchissante connus.

En particulier, l'invention vise aussi à fournir, dans au moins un mode de réalisation de l'invention, un dispositif de support moins coûteux et moins encombrant.

L'invention vise aussi à fournir, dans au moins un mode de réalisation, un dispositif de support mettant en oeuvre peu de pièces mécaniques mobiles.

L'invention vise aussi à fournir, dans au moins un mode de réalisation, un dispositif de support mécaniquement plus fiable et dont le positionnement est plus précis.

L'invention vise aussi à fournir, dans au moins un mode de réalisation de l'invention, un dispositif de support présentant une utilisation et une maintenance aisée.

L'invention vise aussi à fournir, dans au moins un mode de réalisation, un dispositif de support permettant un remplacement et/ou une réparation aisée de la lame semi-transparente.

L'invention vise aussi à fournir, dans au moins un mode de réalisation, un dispositif de support permettant une protection de la lame semi-réfléchissante contre les agressions extérieures.

### 4. Exposé de l'invention

Pour ce faire, l'invention concerne un dispositif de support d'une lame semi-réfléchissante pour un afficheur tête haute d'un véhicule automobile, caractérisé en ce qu'il comprend :
- un socle d'afficheur fixe par rapport au véhicule destiné à recevoir la lame semi-réfléchissante,
- un berceau de réglage lié en rotation selon un premier axe de rotation au socle d'afficheur, et comprenant des premiers moyens d'accrochage,
et en ce que la lame étant reliée à des seconds moyens d'accrochage, elle est adaptée pour être déplacée entre deux positions par rotation dans le socle d'afficheur selon un deuxième axe de rotation de la lame confondu avec le premier axe de rotation :
- une position de retrait, dans laquelle la lame peut être délogée du socle d'afficheur selon un axe de translation,
- une position fixe, dans laquelle les premiers moyens d'accrochage sont destinés à coopérer avec les deuxièmes moyens d'accrochage pour fixer la lame en rotation et en translation par rapport au berceau de réglage.

Un dispositif de support selon l'invention permet donc le support d'une lame dans deux positions :
- une position fixe permettant l'utilisation de la lame semi-réfléchissante pour un afficheur tête haute car la lame semi-réfléchissante est fixée de façon à pouvoir former l'image virtuelle à l'emplacement adapté pour le conducteur en fonctionnement normal,
- une position de retrait, dans laquelle la lame semi-réfléchissante est amovible et peut donc être retirée du support de façon à être réparée, changée, ou bien rangée dans un étui transportable ou un compartiment du véhicule afin de la protéger contre les différentes agressions extérieures (rayonnement solaire, poussière, sollicitations accidentelles, vol, etc.).

Le premier et le deuxième axe de rotation sont confondus et la lame réfléchissante et le berceau de réglage sont liés en rotation au socle d'afficheur qui est fixe par rapport au véhicule, ce qui permet des déplacements mécaniques plus fiables et plus précis par raccourcissement de la chaîne de côte.

Avantageusement et selon l'invention :
- le socle d'afficheur comprend des premiers moyens de verrouillage,
- la lame est reliée à des deuxièmes moyens de verrouillage,
l'ensemble des moyens de verrouillage coopérant en position fixe, de façon à ce que la lame soit verrouillée dans le socle d'afficheur par l'ensemble des moyens de verrouillage.

Selon cet aspect de l'invention, l'ensemble des moyens de verrouillage, c'est-à-dire les premiers moyens de verrouillage et les deuxièmes moyens de verrouillage sont formés de façon à empêcher le mouvement en rotation et en translation de la lame en position fixe. Ces moyens de verrouillage s'ajoutent donc aux moyens d'accrochage pour bloquer la lame semi-réfléchissante en position fixe.

Avantageusement et selon l'invention, le dispositif comprend des moyens de réglage fixes par rapport au véhicule et reliés au berceau de réglage, lesdits moyens de réglage permettant de régler la rotation du berceau de réglage selon le premier axe de rotation.

Selon cet aspect de l'invention, le berceau de réglage peut être mis en rotation par des moyens de réglage, ce qui permet, grâce à la liaison entre la lame semi-réfléchissante et le berceau de réglage par les moyens d'accrochage et grâce aux deux axes de rotations confondus, de déplacer la lame semi-réfléchissante afin de la placer à l'emplacement souhaité par le conducteur.

Avantageusement et selon l'invention, la lame semi-réfléchissante est maintenue par un support de lame, ledit support de lame étant destiné à se loger dans le socle d'afficheur.

Selon cet aspect de l'invention, le support de lame permet de protéger la lame par l'utilisation d'un support de lame intermédiaire entre la lame semi-réfléchissante et le socle d'afficheur. La lame semi-réfléchissante subit alors seulement la contrainte mécanique du maintien dans le support de lame et permet donc de ne pas être soumise à d'autres contraintes mécaniques qui pourraient l'endommager.

Avantageusement et selon l'invention, le support de lame comprend les deuxièmes moyens de verrouillage.

Selon cet aspect de l'invention, les deuxièmes moyens de verrouillage sont situés sur le support de lame afin de ne pas risquer d'endommager la lame par les contraintes mécaniques s'appliquant à ces deuxièmes moyens de verrouillage lorsqu'ils coopèrent avec les premiers moyens de verrouillage du socle d'afficheur en position fixe.

Avantageusement et selon l'invention, le support de lame comprend les deuxièmes moyens d'accrochage.

Selon cet aspect de l'invention, les deuxièmes moyens d'accrochage sont situés sur le support de lame afin de ne pas risquer d'endommager la lame par les contraintes mécaniques s'appliquant à ces deuxièmes moyens d'accrochage lorsqu'ils coopèrent avec les premiers moyens d'accrochage du berceau de réglage.

Avantageusement et selon l'invention, les premiers moyens de verrouillage comprennent un réceptacle destiné à recevoir une attache des deuxièmes moyens de verrouillage, ledit réceptacle comprenant une partie ouverte permettant de déloger l'attache du réceptacle.

Avantageusement et selon l'invention, l'attache est composée d'une section cylindrique dans laquelle sont formés symétriquement deux méplats.

Avantageusement et selon l'invention, les premiers moyens de verrouillage comprennent une butée intérieure et une butée extérieure destinées à bloquer la rotation de l'attache à l'intérieur du réceptacle.

Avantageusement et selon l'invention, les premiers moyens d'accrochage comprennent un ressort à lame ayant deux extrémités, une extrémité étant encastrée dans le berceau de réglage et l'autre extrémité maintenant un rouleau.

Avantageusement et selon l'invention, les deuxièmes moyens d'accrochage comprennent une accroche coudée comprenant une cavité.

Avantageusement et selon l'invention, les moyens de réglages comprennent une vis sans fin et une portion de roue crantée fixée au berceau de réglage, la rotation de la vis sans fin entrainant la rotation du berceau de réglage via la portion de roue crantée.

L'invention concerne également un dispositif de support caractérisé en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective d'un dispositif de support selon un mode de réalisation de l'invention,
- la figure 2 est une vue schématique de profil d'un dispositif de support selon un mode de réalisation de l'invention,
- la figure 3 est une vue schématique de face d'un dispositif de support selon un mode de réalisation de l'invention,
- la figure 4 est une vue schématique de profil en plan détaillé d'un dispositif de support selon un mode de réalisation de l'invention,
- la figure 5 est une vue schématique de face en plan détaillé d'un dispositif du support selon un mode de réalisation de l'invention,
- la figure 6 est une vue schématique de profil d'un dispositif de support selon un mode de réalisation de l'invention pendant une phase de réglage,
- la figure 7 est une vue schématique de profil d'un dispositif de support selon un mode de réalisation de l'invention pendant une première phase d'un démontage de la lame semi-réfléchissante,
- la figure 8 est une vue schématique de profil d'un dispositif de support selon un mode de réalisation de l'invention pendant une deuxième phase d'un démontage de la lame semi-réfléchissante,
- la figure 9 est une vue schématique de profil d'un dispositif de support selon un mode de réalisation de l'invention pendant une troisième phase d'un démontage de la lame semi-réfléchissante,
- la figure 10 est une vue schématique de profil d'un dispositif de support selon un mode de réalisation de l'invention pendant une première phase d'un montage de la lame semi-réfléchissante,
- la figure 11 est une vue schématique de profil d'un dispositif de support selon un mode de réalisation de l'invention pendant une deuxième phase d'un montage de la lame semi-réfléchissante,
- la figure 12 est une vue schématique de profil d'un dispositif de support selon un mode de réalisation de l'invention pendant une troisième phase d'un montage de la lame semi-réfléchissante,
- la figure 13 est une vue schématique de profil d'un dispositif de support selon un mode de réalisation de l'invention avec la lame semi-réfléchissante en position fixe, après un montage de la lame semi-réfléchissante,

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

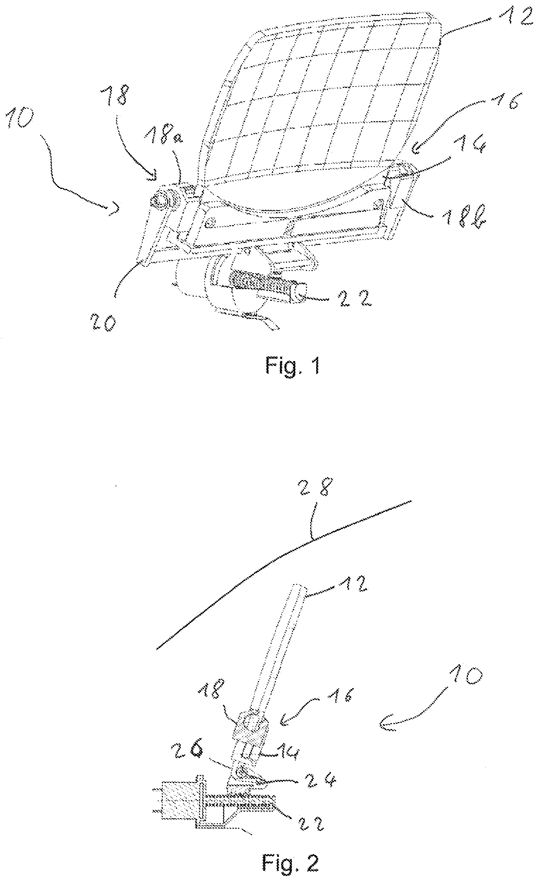

La figure 1 représente de façon schématique en perspective un dispositif 10 de support selon un mode de réalisation de l'invention.

Le dispositif 10 de support comprend une lame 12 semi-réfléchissante (aussi appelé *combiner* en anglais) destinée à la formation d'une image virtuelle affichée par un afficheur tête haute, situé dans un véhicule automobile. L'image est généralement générée par un système de projection (non représenté) et projetée en direction de la lame 12 semi-réfléchissante. L'image virtuelle formée par la lame 12 semi-réfléchissante est ainsi visible par le conducteur du véhicule automobile. La lame 12 semi-réfléchissante est par exemple fabriquée par injection plastique, et nécessite une grande précision pour des propriétés optiques optimales.

Dans ce mode de réalisation, et de façon à protéger la lame 12 semi-réfléchissante des contraintes mécaniques liées aux différents mouvements de la lame 12 semi-réfléchissante dans le dispositif 10 de support, la lame 12 semi-réfléchissante est maintenue par un support 14 de lame. Ce support 14 de lame est en liaison complète avec la lame 12 semi-réfléchissante, de façon à ce que la lame 12 semi-réfléchissante ne puisse pas se déplacer indépendamment du support 14 de lame. Le support 14 de lame et la lame 12 semi-réfléchissante sont par exemple liés par collage, vissage, rivetage, etc. Le support 14 de lame permet en outre d'éviter toute contrainte à la lame 12 semi-réfléchissante qui entraînerait une dégradation des propriétés optiques. Le support 14 de lame participe donc à améliorer la précision optique nécessaire à l'usage de la lame 12 semi-réfléchissante dans un afficheur tête haute.

Dans la suite de la description, on utilisera le terme « sous-ensemble lame 16» pour désigner l'ensemble comprenant le support 14 de lame et la lame 12 semi-réfléchissante.

Selon un autre mode de réalisation, non représenté, la lame 12 semi-réfléchissante n'est pas reliée au support 14 de lame. Dans ce cas, le sous-ensemble lame 16 comprend seulement la lame 12 semi-réfléchissante.

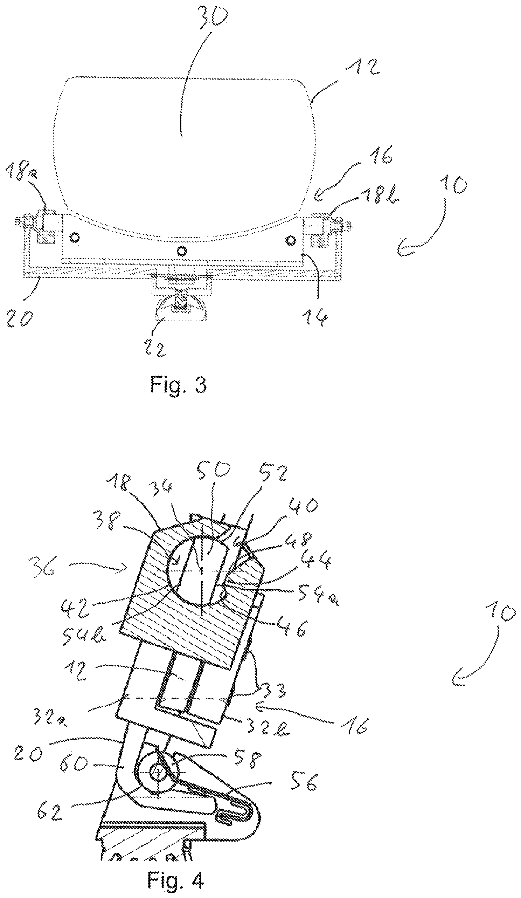

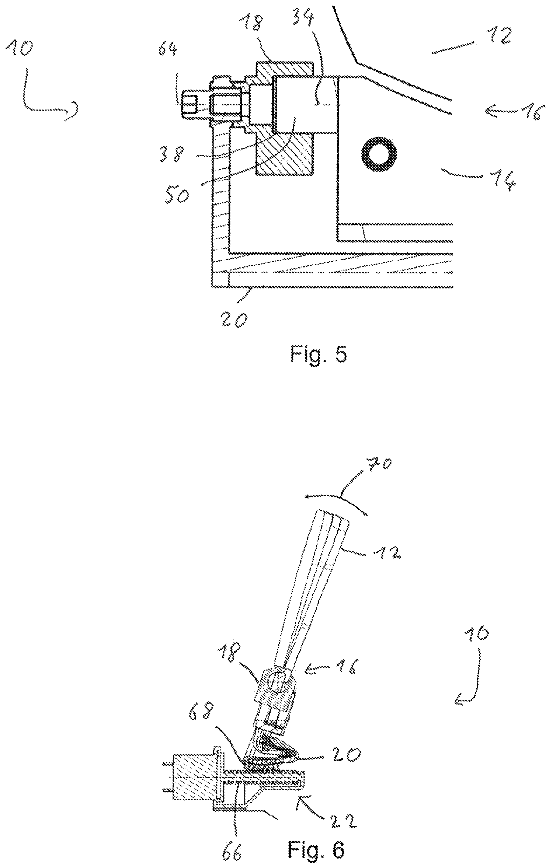

Le sous-ensemble lame 16 est relié à un socle 18 d'afficheur, fixe par rapport au véhicule, représenté ici partiellement aux références 18a et 18b. La liaison entre le sous-ensemble lame 16 et le socle 18 d'afficheur est réalisé de sorte à permettre une rotation du sous-ensemble lame 16 par rapport au socle 18 d'afficheur. La liaison est décrite plus en détail dans la suite de la description en référence aux figures 4 et 5.

Le socle 18 d'afficheur est aussi lié en rotation à un berceau 20 de réglage selon un premier axe de rotation. Le berceau 20 de réglage est lié à des moyens 22 de réglages décrit plus en détail dans la suite de la description en référence à la figure 6.

Le berceau 20 de réglage et le sous-ensemble lame 16 sont reliés respectivement à des premiers moyens 24 d'accrochage et deuxième moyens 26 d'accrochage, qui, en coopérant, permettent de fixer le sous-ensemble lame 16 en rotation et en translation par rapport au berceau 20 de réglage et dont le fonctionnement est décrit plus en détail dans la suite de la description en référence aux figures 4 et 7 à 13.

La figure 2 représente le dispositif 10 de support en vue de profil selon un mode de réalisation de l'invention. Le dispositif 10 de support est installé dans un véhicule automobile et reçoit un sous-ensemble lame 16 en position de fonctionnement, position dans laquelle le sous-ensemble lame 16 est fixe par rapport au véhicule, ci après appelée position fixe. Le dispositif 10 de support est situé devant le conducteur, de préférence derrière le volant du véhicule (non représenté). Le dispositif 10 de support se situe donc en dessous du pare-brise du véhicule, repéré 28. La position du pare-brise 28 au dessus du dispositif 10 de support et du sous-ensemble lame 16 entraine des contraintes quant à la façon dont le sous-ensemble lame 16 peut-être détaché du socle 18 d'afficheur : le sous-ensemble lame 16 doit avoir un angle et un écartement minimum par rapport au pare-brise 28 afin de pouvoir être retiré du socle 18 d'afficheur.

La figure 3 représente le dispositif 10 de support en vue de face selon un mode de réalisation de l'invention. Cette représentation est proche de ce qu'observe le conducteur pendant la conduite du véhicule. L'image virtuelle visible par le conducteur se forme sur la surface avant 30 de la lame 12 semi-réfléchissante. Afin que l'image soit bien visible par le conducteur, celui-ci peut régler la lame 12 semi-réfléchissante de façon à incliner cette surface avant 30 jusqu'à obtenir le bon réglage. Ce réglage est effectué par les moyens 22 de réglages comme décrit dans la suite de la description en référence à la figure 6. Le sous-ensemble lame 16 et le berceau 20 de réglage sont reliés au socle 18 d'afficheur de chaque côté du sous-ensemble lame 16, dits côté gauche et côté droit, par des mécanismes symétriques.

La figure 4 représente en plan détaillé et de profil le dispositif 10 de support selon un mode de réalisation de l'invention. Seul le côté gauche du sous-ensemble lame 16 est représenté, et les caractéristiques décrites s'appliquent aussi au côté droit de façon symétrique. La liaison entre le berceau 20 de réglage et le socle 18 d'afficheur, visible notamment figure 1 et 3, n'est pas représentée sur cette figure et est décrite en référence à la figure 5.

La lame 12 semi-réfléchissante est ici maintenu par le support 14 de lame par le biais de deux plaques 32a, 32b du support 14 de lame situées de part et d'autre de la lame 12 semi-réfléchissante et reliées entre elle par des vis 33 traversant les deux surfaces 32a, 32b et la lame 12 semi-réfléchissante. Pour assurer une bonne rigidité mécanique, de la colle est par exemple aussi utilisée en complément sur les surfaces de contact entre la lame 12 semi-réfléchissante et les plaques 32a, 32b. La solidification de la colle après le vissage des plaques par les vis 33 permet de combler les espaces pouvant se former entre la lame 12 semi-réfléchissante et les plaques 32a, 32b, et d'assurer une résistance mécanique permettant d'assurer la liaison complète de la lame 12 semi-réfléchissante et du support 14 de lame. La lame 12 semi-réfléchissante et le support 14 de lame sont ainsi en liaison complète pour former le sous-ensemble lame 16.

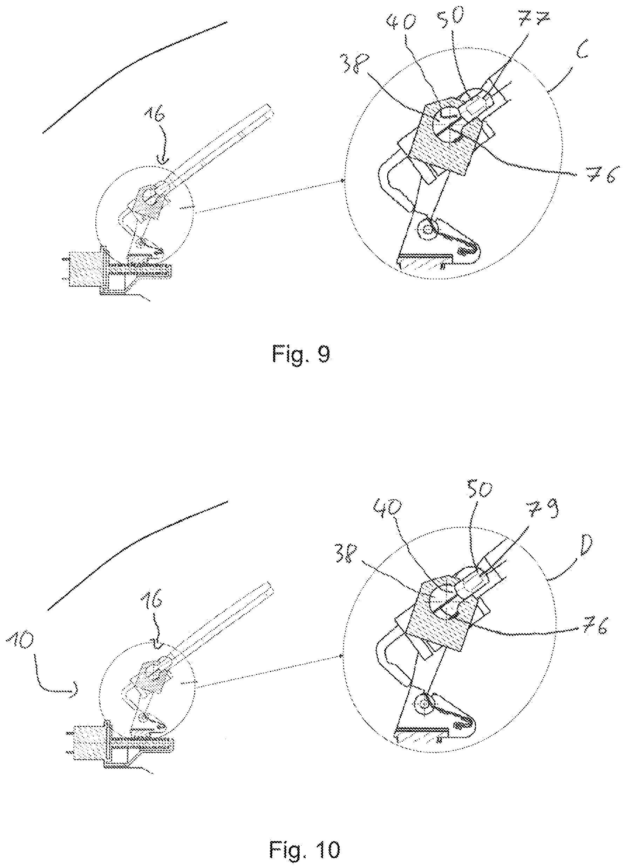

Le sous-ensemble lame 16 et le socle 18 d'afficheur sont reliés par une liaison en rotation selon un deuxième axe 34 de rotation, perpendiculaire au plan de la figure. La liaison en rotation est effectuée par une liaison 36 pivot, comprenant dans ce mode de réalisation, de chaque côté du sous-ensemble lame 16 :
- un réceptacle 38 creusé dans le socle 18 d'afficheur, comprenant une partie 40 ouverte, une partie 42 cylindrique et une partie 44 en excroissance. La partie 40 ouverte est destinée à permettre le montage ou le démontage du sous-ensemble lame 16 lors de la réception du sous-ensemble lame 16 par le socle 18 d'afficheur, comme décrit plus en détail dans la suite de la description aux figures 9 et 10. La partie 42 cylindrique permet la rotation du sous-ensemble lame 16 dans le socle 18 d'afficheur, pour le réglage, le montage ou le démontage du sous-ensemble lame 16. La partie 44 en excroissance comprend une butée 46 intérieure et une butée 48 extérieure, permettant toutes les deux de bloquer la rotation du sous-ensemble lame 16 dans le socle 18 d'afficheur lorsque le sous-ensemble lame 16 atteint certains angles d'inclinaison par rapport au socle 18 d'afficheur.
- une attache 50 du sous-ensemble lame 16 constitué d'une section 52 cylindrique dans laquelle sont formés symétriquement deux méplats 54a, 54b. La section 52 cylindrique est de taille correspondante à la partie 42 cylindrique du réceptacle 38 de façon à permettre la rotation du sous-ensemble lame 16 dans le socle 18 d'afficheur. Les méplats 54a, 54b réduisent la taille de la section 52 cylindrique à une largeur d'attache qui a la taille de la partie 40 ouverte du réceptacle 38 afin de permettre le montage et le démontage du sous-ensemble lame 16 dans le socle 18 d'afficheur. De plus, la surface du méplat 54a vient en contact de la butée 46 intérieure et de la butée 48 extérieure pour bloquer l'attache 50 et donc le sous-ensemble lame 16 en rotation. Selon le mode de réalisation où le sous-ensemble lame 16 comprend le support 14 de lame, l'attache 50 est située sur le support 14 de lame. Selon le mode de réalisation où le sous-ensemble lame 16 comprend uniquement la lame 12 semi-réfléchissante, l'attache 50 est située sur la lame 12 semi-réfléchissante.

Le réceptacle 38 et l'attache 50 forment respectivement une partie des premiers moyens de verrouillage et des deuxièmes moyens de verrouillage permettant, en position fixe, de verrouiller le sous-ensemble lame 16 dans le socle 18 d'afficheur, c'est-à-dire empêcher le démontage du sous-ensemble lame 16.

La figure 4 représente aussi les premiers moyens 24 d'accrochage et les deuxièmes moyens 26 d'accrochage, respectivement reliés au berceau 20 de réglage et au sous-ensemble lame 16, et permettant de fixer le sous-ensemble lame 16 en rotation et en translation par rapport au berceau 20 de réglage. Comme représenté figure 1 et 3, les moyens 24, 26 d'accrochage sont par exemple situé au centre du dispositif 10 de support et en dessous du sous-ensemble lame 16.

Les premiers moyens 24 d'accrochage du berceau 20 de réglage comprennent un ressort 56 à lame, dont une extrémité est encastrée dans le berceau 20 de réglage, et un rouleau 58, maintenu par l'autre extrémité du ressort 56 à lame.

Les deuxièmes moyens 26 d'accrochage du sous-ensemble lame 16 comprennent une accroche 60 coudée, comprenant une cavité 62 destinée à recevoir le rouleau 58 des premiers moyens 24 d'accrochage. Le ressort 56 à lame permet de maintenir le rouleau 58 en contact avec la cavité 62 de façon à empêcher une rotation ou translation du sous-ensemble lame 16 en position fixe. Seule une force suffisante exercée sur la lame 12 semi-réfléchissante permet de déloger le rouleau 58 de la cavité 62, par exemple une force exercée par le conducteur pour démonter le sous-ensemble lame 16.

La figure 5 représente de façon partielle et détaillée, de face, le dispositif 10 de support selon un mode de réalisation de l'invention. Seul le côté gauche du sous-ensemble lame 16 est représenté, et les caractéristiques décrites s'appliquent aussi au côté droit de façon symétrique.

Le réceptacle 38 du socle 18 d'afficheur et l'attache 50 du sous-ensemble lame sont liés et permettent la rotation du sous-ensemble lame 16 selon le deuxième axe 34 de rotation. Le berceau 20 de réglage est quant à lui lié au socle 18 d'afficheur par une liaison pivot selon le premier axe 64 de rotation. Afin de permettre le réglage du sous-ensemble lame 16 par rotation du berceau 20 de réglage en limitant le nombre de liaison et en diminuant la chaîne de côte, le premier axe 64 de rotation et le deuxième axe 34 de rotation sont confondus.

La figure 6 représente schématiquement le dispositif 10 de support selon un mode de réalisation de l'invention pendant une phase de réglage. Les moyens 22 de réglage sont ici composés d'une vis 66 sans fin qui coopère avec une portion 68 de roue crantée du berceau 20 de réglage. La rotation de la vis 66 sans fin permet le déplacement de la portion 68 de roue crantée et ainsi, grâce à la liaison pivot entre le berceau 20 de réglage et le socle 18 d'afficheur, une rotation du berceau 20 de réglage. Les moyens 24, 26 d'accrochage (voir figure 2) permettent d'entraîner de ce fait la rotation du sous-ensemble lame 16 par rapport au socle 18 d'afficheur. Le conducteur peut ainsi régler la position et l'inclinaison du sous-ensemble lame 16 comme représenté par la double flèche 70, pour permettre de former l'image virtuelle à l'endroit souhaité. Selon les modes de réalisation, la rotation de la vis 66 sans fin peut être par exemple effectuée manuellement par le conducteur ou via un moteur électrique piloté par des commandes accessibles au conducteur.

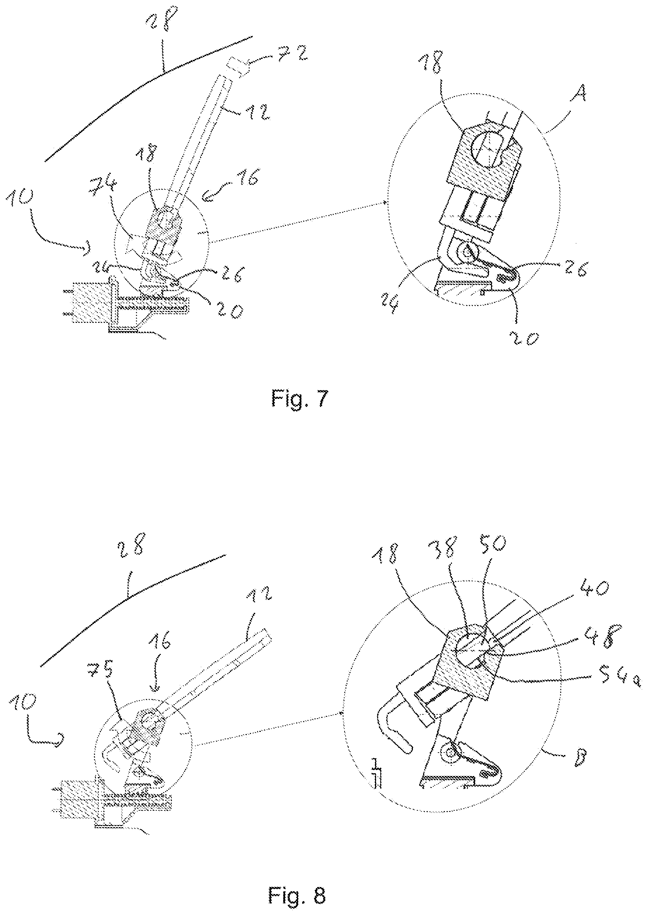

La figure 7 représente schématiquement le dispositif 10 de support selon un mode de réalisation de l'invention pendant une première phase de démontage du sous-ensemble lame 16, ainsi qu'une vue en détail A. Comme décrit précédemment, en position fixe, le sous-ensemble lame 16 est lié au berceau 20 de réglage par les moyens 24, 26 d'accrochage. Pour démonter le sous-ensemble lame 16, le conducteur doit exercer une force sur le sous-ensemble lame 16, par exemple ici une traction du sommet de la lame 12 semi-réfléchissante vers le conducteur comme représenté par la flèche référencée 72. Cette traction permet la désolidarisation des deux moyens 24, 26, d'accrochages : le rouleau 58 est délogé de la cavité 62 et le sous-ensemble lame 16 peut effectuer une rotation indépendamment du berceau 20 de réglage (rotation représentée par la flèche 74). Le sous-ensemble lame 16 reste néanmoins verrouillé au socle 18 d'afficheur par les moyens de verrouillage dans cette position.

La figure 8 représente une deuxième phase de démontage du sous-ensemble lame 16, ainsi qu'une vue en détail B. Cette deuxième phase suit la première phase si le conducteur continue la traction de la lame 12 semi-réfléchissante, qui continue donc sa rotation (représentée par la flèche 75) jusqu'à ce que le méplat 54a de l'attache 50 du sous-ensemble lame 16 rentre en contact avec la butée extérieure 48 du réceptacle 38. L'attache 50 est ainsi placée en regard de la partie 40 ouverte du réceptacle 38 du socle 18 d'afficheur pour permettre le démontage du sous-ensemble lame 16.

La figure 9 représente une troisième phase de démontage du sous-ensemble lame 16, ainsi qu'une vue en détail C. L'attache 50 étant placée en regard de la partie 40 ouverte du réceptacle 38, le conducteur peut retirer le sous-ensemble lame 16 en le tirant vers lui suivant un axe 76 de translation passant au centre de la partie 40 ouverte du réceptacle 38. Le retrait de la lame est représenté par la flèche 77. Le sous-ensemble lame 16 peut ainsi être rangé, réparé ou remplacé.

La figure 10 représente schématiquement le dispositif 10 de support selon un mode de réalisation de l'invention pendant une première phase de montage du sous-ensemble lame 16, ainsi qu'une vue en détail D. L'attache 50 du sous-ensemble lame 16 est placé en face de la partie 40 ouverte du réceptacle 38 et insérée selon le même axe de translation 76 que lors de la troisième phase de démontage, comme représenté par la flèche 79.

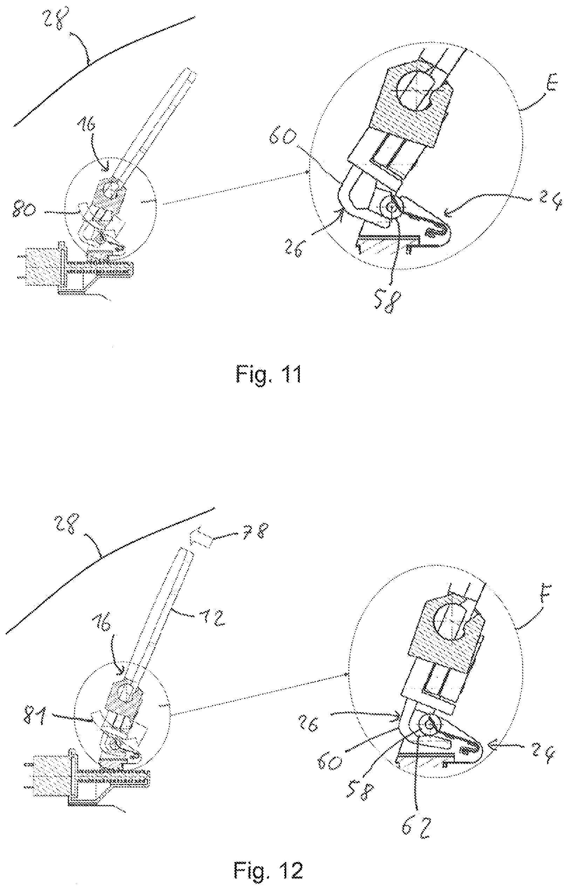

La figure 11 représente schématiquement une deuxième phase de montage du sous-ensemble lame 16, ainsi qu'une vue en détail E, dans laquelle les premiers moyens 24 d'accrochage et les deuxièmes moyens 26 d'accrochage viennent en contact après rotation comme représenté par la flèche 80. Notamment, le rouleau 58 des premiers moyens 24 d'accrochage sont en contact avec l'accroche 60 coudée des deuxièmes moyens 26 d'accrochage.

La figure 12 représente schématiquement une troisième phase de montage du sous-ensemble lame 16, ainsi qu'une vue en détail F. Le conducteur exerce une force (représentée par la flèche 78) sur le sommet de la lame 12 semi-réfléchissante, ladite force étant nécessaire pour que la rotation du sous-ensemble lame 16 (représenté par la flèche 81) continue come à la phase précédente et que le rouleau 58 des premiers moyens 24 d'accrochage soit déplacé le long de l'accroche 60 coudée des deuxièmes moyens 26 d'accrochage jusqu'à la cavité 62 de l'accroche 60 coudée.

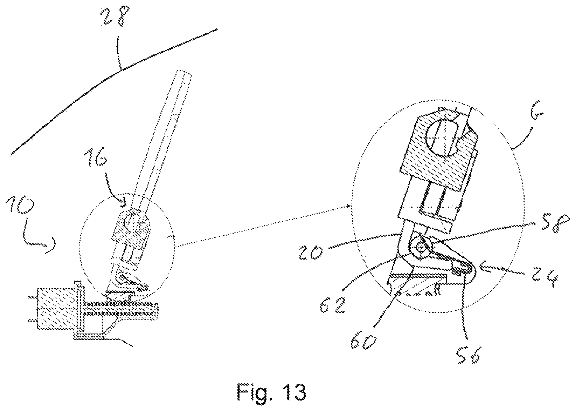

La figure 13 représente schématiquement le dispositif 10 de support selon un mode de réalisation de l'invention, avec le sous-ensemble lame 16 en position fixe, après un montage tel que décrit en référence aux figures 10 à 12, ainsi qu'une vue en détail G. Le rouleau 58 des premiers moyens 24 d'accrochage est maintenu dans la cavité 62 de l'accroche 60 coudée par le ressort 56 à lame et permet le maintien du sous-ensemble lame 16 dans berceau 20 de réglage. À partir de cette position fixe, le sous-ensemble lame 16 peut être démonté en suivant les phases de démontage décrit en référence aux figures 7 à 9.

Comme visible particulièrement sur les figures 7 et 13, le sous-ensemble lame 16 en position de fonctionnement dans ce mode de réalisation a sa partie supérieure proche du pare-brise 28 qui rend impossible l'extraction du sous-ensemble lame 16 vers le haut. Ainsi, l'invention permet le montage et le démontage du sous-ensemble lame 16 sans être contraint par le pare-brise 28, par l'insertion ou le retrait du sous-ensemble lame 16 selon un axe 76 de translation dont l'angle d'inclinaison par rapport à la verticale est proche de l'angle d'inclinaison du pare-brise 28, comme représenté par exemple aux figures 9 et 10.

## Revendications

1. Dispositif de support (10) d'une lame (12) semi-réfléchissante pour un afficheur tête haute d'un véhicule automobile, comprenant :
- un socle (18) d'afficheur fixe par rapport au véhicule, destiné à recevoir la lame (12) semi-réfléchissante,
- un berceau (20) de réglage lié en rotation selon un premier axe (64) de rotation au socle (18) d'afficheur, et comprenant des premiers moyens (24) d'accrochage,
- un sous-ensemble (16) lame comportant la lame (12), ladite lame (12) étant reliée à des seconds moyens (26) d'accrochage, elle est adaptée pour être déplacée entre deux positions, par rotation dans le socle (18) d'afficheur selon un deuxième axe (34) de rotation de la lame (12) confondu avec le premier axe (64) de rotation :
- une position de retrait, dans laquelle la lame (12) peut être délogée du socle (18) d'afficheur selon un axe (76) de translation,
- une position fixe, dans laquelle les premiers moyens (24) d'accrochage sont destinés à coopérer avec les deuxièmes moyens (26) d'accrochage pour fixer la lame (12) en rotation et en translation par rapport au berceau (20) de réglage.

2. Dispositif de support selon la revendication précédente, **caractérisé en ce que** :
- le socle (18) d'afficheur comprend des premiers moyens (38) de verrouillage,
- la lame (12) est reliée à des deuxièmes moyens (50) de verrouillage,
l'ensemble (38 ; 50) des moyens de verrouillage coopérant en position fixe, de façon à ce que la lame (12) soit verrouillée dans le socle (18) d'afficheur par l'ensemble (38 ; 50) des moyens de verrouillage.

3. Dispositif de support selon l'une des revendications précédentes, **caractérisé en ce qu'**il comprend des moyens (22) de réglage fixes par rapport au véhicule et reliés au berceau (20) de réglage, lesdits moyens (22) de réglage permettant de régler la rotation du berceau (20) de réglage selon le premier axe (64) de rotation.

4. Dispositif de support selon l'une des revendications précédentes, **caractérisé en ce que** le sous-ensemble (16) lame comprend un support (14) de lame, lame (12) semi-réfléchissante est maintenue par le support (14) de lame, ledit support (14) de lame étant destiné à se loger dans le socle (18) d'afficheur.

5. Dispositif de support selon la revendication 4, **caractérisé en ce que** le support (14) de lame comprend les deuxièmes moyens (50) de verrouillage.

6. Dispositif de support selon l'une des revendications 4 ou 5, **caractérisé en ce que** le support (14) de lame comprend les deuxièmes moyens (26) d'accrochage.

7. Dispositif de support selon la revendication 2 et l'une quelconque des revendications 3 à 6 **caractérisé en ce que** les premiers moyens de verrouillage comprennent un réceptacle (38) destiné à recevoir une attache (50) des deuxièmes moyens de verrouillage, ledit réceptacle (38) comprenant une partie (40) ouverte permettant de déloger l'attache (50) du réceptacle (38).

8. Dispositif de support selon la revendication 7, **caractérisé en ce que** l'attache (50) est composée d'une section (52) cylindrique dans laquelle sont formés symétriquement deux méplats (54a, 54b).

9. Dispositif de support selon l'une des revendications 7 ou 8, **caractérisé en ce que** les premiers moyens de verrouillage comprennent une butée (46) intérieure et une butée (48) extérieure destinées à bloquer la rotation de l'attache (50) à l'intérieur du réceptacle (38).

10. Dispositif de support selon l'une des revendications précédentes, **caractérisé en ce que** les premiers moyens (24) d'accrochage comprennent un ressort (56) à lame ayant deux extrémités, une extrémité étant encastrée dans le berceau (20) de réglage et l'autre extrémité maintenant un rouleau (58).

11. Dispositif de support selon l'une des revendications précédentes, **caractérisé en ce que** les deuxièmes moyens (26) d'accrochage comprennent une accroche (60) coudée comprenant une cavité (62).

12. Dispositif de support selon la revendication 3 et l'une quelconque des revendications précédentes, **caractérisé en ce que** les moyens (22) de réglages comprennent une vis (66) sans fin et une portion (68) de roue crantée fixée au berceau (20) de réglage, la rotation de la vis (66) sans fin entrainant la rotation du berceau (20) de réglage via la portion (68) de roue crantée.

## Patentansprüche

1. Stützvorrichtung (10) für eine halbreflektierende Platte (12) für eine Head-up-Anzeige eines Kraftfahrzeugs, umfassend:
- einen Anzeigefuß (18), der bezogen auf das Fahrzeug fest ist und die halbreflektierende Platte (12) aufnehmen soll,
- eine Einstellhalterung (20), die in Richtung einer ersten Drehachse (64) mit dem Anzeigefuß (18) drehverbunden ist und erste Festhakmittel (24) umfasst,
- eine Plattenuntergruppe (16), die die Platte (12) aufweist, wobei die Platte (12) mit zweiten Festhakmitteln (26) verbunden ist und so ausgelegt ist, dass sie durch Drehung in dem Anzeigefuß (18) um eine zweite Drehachse (34) der Platte (12), die mit der ersten Drehachse (64) zusammenfällt, zwischen zwei Stellungen verschoben wird:
- einer Entnahmestellung, in der die Platte (12) in Richtung einer Translationsachse (76) aus dem Anzeigefuß (18) herausgelöst werden kann,
- einer festen Stellung, in der die ersten Festhakmittel (24) mit den zweiten Festhakmitteln (26) zusammenwirken sollen, damit die Platte (12) bezogen auf die Einstellhalterung (20) hinsichtlich Dreh- und Translationsbewegung festgestellt wird.

2. Stützvorrichtung nach dem vorhergehenden Anspruch, **dadurch gekennzeichnet, dass**:
- der Anzeigefuß (18) erste Arretierungsmittel (38) umfasst,
- die Platte (12) mit zweiten Arretierungsmitteln (50) verbunden ist, wobei die Baugruppe (38; 50) aus den Arretierungsmitteln in der festen Stellung derart zusammenwirkt, dass die Platte (12) im Anzeigefuß (18) über die Baugruppe (38; 50) aus den Arretierungsmitteln arretiert ist.

3. Stützvorrichtung nach einem der vorhergehenden Ansprüche, **dadurch gekennzeichnet, dass** sie Einstellmittel (22) umfasst, die bezogen auf das Fahrzeug fest sind und mit der Einstellhalterung (20) verbunden sind, wobei die Einstellmittel (22) die Einstellung der Drehung der Einstellhalterung (20) um die erste Drehachse (64) ermöglichen.

4. Stützvorrichtung nach einem der vorhergehenden Ansprüche, **dadurch gekennzeichnet, dass** die Plattenuntergruppe (16) einen Plattenträger (14) umfasst, wobei die halbreflektierende Platte (12) von dem Plattenträger (14) gehalten wird, wobei der Plattenträger (14) in dem Anzeigefuß (18) aufgenommen werden soll.

5. Stützvorrichtung nach Anspruch 4, **dadurch gekennzeichnet, dass** der Plattenträger (14) die zweiten Arretierungsmittel (50) umfasst.

6. Stützvorrichtung nach Anspruch 4 oder 5, **dadurch gekennzeichnet, dass** der Plattenträger (14) die zweiten Festhakmittel (26) umfasst.

7. Stützvorrichtung nach Anspruch 2 und einem der Ansprüche 3 bis 6, **dadurch gekennzeichnet, dass** die ersten Arretierungsmittel eine Aufnahme (38) umfassen, die ein Verbindungsstück (50) der zweiten Arretierungsmittel aufnehmen soll, wobei die Aufnahme (38) einen offenen Teil (40) umfasst, der ein Herauslösen des Verbindungsstücks (50) aus der Aufnahme (38) ermöglicht.

8. Stützvorrichtung nach Anspruch 7, **dadurch gekennzeichnet, dass** das Verbindungsstück (50) aus einem zylindrischen Abschnitt (52) aufgebaut ist, in dem symmetrisch zwei Abflachungen (54a, 54b) ausgebildet sind.

9. Stützvorrichtung nach Anspruch 7 oder 8, **dadurch gekennzeichnet, dass** die ersten Arretierungsmittel einen inneren Anschlag (46) und einen äußeren Anschlag (48) umfassen, die dafür bestimmt sind, die Drehung des Verbindungsstücks (50) im Inneren der Aufnahme (38) zu verhindern.

10. Stützvorrichtung nach einem der vorhergehenden Ansprüche, **dadurch gekennzeichnet, dass** die ersten Festhakmittel (24) eine Blattfeder (56) mit zwei Enden umfassen, wobei ein Ende in der Einstellhalterung (20) eingelassen ist und das andere Ende eine Rolle (58) hält.

11. Stützvorrichtung nach einem der vorhergehenden Ansprüche, **dadurch gekennzeichnet, dass** die zweiten Festhakmittel (26) einen gebogenen Haken (60) mit einer Aussparung (62) umfassen.

12. Stützvorrichtung nach Anspruch 3 und einem der vorhergehenden Ansprüche, **dadurch gekennzeichnet, dass** die Einstellmittel (22) eine Schnecke (66) und einen gezahnten Radabschnitt (68) umfassen, der an der Einstellhalterung (20) befestigt ist, wobei die Drehung der Schnecke (66) die Drehung der Einstellhalterung (20) über den gezahnten Radabschnitt (68) bewirkt.

## Claims

1. Holding device (10) for a semi-reflective plate (12) for a head-up display of a motor vehicle, comprising:
- a display mount (18) that is fixed with respect to the vehicle and intended to receive the semi-reflective plate (12),
- an adjusting cradle (20) that is rotationally connected to the display mount (18) about a first axis of rotation (64) and comprises first coupling means (24),
- a plate subassembly (16) including the plate (12),
said plate (12) being connected to second coupling means (26) and being designed to be moved between two positions by rotation in the display mount (18) about a second axis of rotation (34) of the plate (12) that is coincident with the first axis of rotation (64):
- a retracted position in which the plate (12) can be removed from the display mount (18) along an axis of translation (76),
- a fixed position in which the first coupling means (24) are intended to cooperate with the second coupling means (26) in order to fix the plate (12) in rotation and translation with respect to the adjusting cradle (20).

2. Holding device according to the preceding claim, **characterized in that**:
- the display mount (18) comprises first locking means (38),
- the plate (12) is connected to second locking means (50),
the sets of locking means (38; 50) cooperating in the fixed position, such that the plate (12) is locked in the display mount (18) by the sets of locking means (38; 50) .

3. Holding device according to either of the preceding claims, **characterized in that** it comprises adjusting means (22) that are fixed with respect to the vehicle and are connected to the adjusting cradle (20), said adjusting means (22) making it possible to adjust the rotation of the adjusting cradle (20) about the first axis of rotation (64).

4. Holding device according to one of the preceding claims, **characterized in that** the plate subassembly (16) comprises a plate holder (14), the semi-reflective plate (12) is held by the plate holder (14), said plate holder (14) being intended to be housed in the display mount (18).

5. Holding device according to Claim 4, **characterized in that** the plate holder (14) comprises the second locking means (50).

6. Holding device according to either of Claims 4 and 5, **characterized in that** the plate holder (14) comprises the second coupling means (26).

7. Holding device according to Claim 2 and any one of Claims 3 to 6, **characterized in that** the first locking means comprise a receptacle (38) that is intended to receive an attachment (50) of the second locking means, said receptacle (38) comprising an open part (40) for removing the attachment (50) from the receptacle (38).

8. Holding device according to Claim 7, **characterized in that** the attachment (50) is made up of a cylindrical section (52) in which two flats (54a, 54b) are formed symmetrically.

9. Holding device according to either of Claims 7 and 8, **characterized in that** the first locking means comprise an inner stop (46) and an outer stop (48) that are intended to prevent the rotation of the attachment (50) inside the receptacle (38).

10. Holding device according to one of the preceding claims, **characterized in that** the first coupling means (24) comprise a leaf spring (56) having two ends, one end being fitted in the adjusting cradle (20) and the other end holding a roller (58).

11. Holding device according to one of the preceding claims, **characterized in that** the second coupling means (26) comprise a bent hook (60) comprising a cavity (62) .

12. Holding device according to Claim 3 and any one of the preceding claims, **characterized in that** the adjusting means (22) comprise a worm (66) and a toothed-wheel portion (68) fixed to the adjusting cradle (20), the rotation of the worm (66) causing the rotation of the adjusting cradle (20) via the toothed-wheel portion (68).
